# EUROPÄISCHE PATENTANMELDUNG

(11) **EP 4 632 997 A1**
(43) Veröffentlichungstag der Anmeldung: **15.10.2025**
(21) Anmeldenummer: 25164282.3
(22) Anmeldetag: 18.03.2025
(51) Int. Cl.: H02J 7/00, H01R 13/72, H01R 25/00

(54) **VORRICHTUNG ZUM HALTERN UND ORDNEN VON ELEKTRISCHEN LADEGERÄTEN, INSBESONDERE ZUM LADEN VON SPEICHERN FÜR ELEKTRISCHE ENERGIE VON WERKZEUGEN, GARTEN- UND HAUSHALTSGERÄTEN**

(30) Priorität: 28.03.2024 DE 102024108898
(71) Anmelder: Faber, Cornelius, 34537 Bad Wildungen (DE)
(72) Erfinder: Faber, Cornelius, 34537 Bad Wildungen (DE)
(74) Vertreter: Walther Bayer Faber Patentanwälte PartGmbB

(57) **Zusammenfassung**

Die vorliegende Erfindung betrifft eine Vorrichtung (10) zum Haltern und Ordnen von elektrischen Ladegeräten (12), insbesondere zum Laden von Speichern für elektrische Energie von Werkzeugen, Garten- und Haushaltsgeräten, umfassend einen flächigen Grundkörper (14), und zumindest eine Feststelleinrichtung (22), welche mit dem Grundkörper (14) verbindbar oder verbunden ist, und mit welcher das Ladegerät (12) form- und/oder reibschlüssig lösbar am Grundkörper (14) befestigbar ist.

## Beschreibung

Die vorliegende Erfindung betrifft eine Vorrichtung zum Haltern und Ordnen von elektrischen Ladegeräten, insbesondere zum Laden von Speichern für elektrische Energie von Werkzeugen, Garten- und Haushaltsgeräten sowie zum Haltern und Ordnen von derartigen Speichern.

Im Zuge der zunehmenden Elektrifizierung verfügen heutzutage immer mehr Geräte, insbesondere Werkzeuge wie Bohrmaschinen oder Gartengeräte wie Rasenmäher und Laubbläser, über aufladbare Speicher für elektrische Energie, die häufig auch als Ackumulatoren oder kurz als Akkus bezeichnet werden. In vielen Fällen müssen die Akkumulatoren zum Laden vom Gerät, welches sie mit elektrischer Energie versorgen, getrennt und mit einem passenden Ladegerät verbunden werden, das wiederum an das vorhandene Stromnetz angeschlossen wird. Je nach Art des betreffenden Gerätes und je nach Hersteller unterscheiden sich die Speicher und entsprechend auch die Ladegeräte, so dass sich schnell eine relativ hohe Anzahl von Ladegeräten ansammelt, die häufig verstreut gelagert und mitunter erst gesucht werden muss, wenn der betreffende Speicher aufgeladen werden soll.

Um die Ladegeräte und/oder die Speicher zentral anzuordnen, könnten diese beispielsweise auf eine Platte geschraubt werden. In vielen Fällen weisen aber die Ladegeräte keine mit Anschraublöchern versehene Laschen oder dergleichen auf, mit denen ein Befestigen an der Platte möglich wäre. Eine Option wäre, das Gehäuse der Ladegeräte zu öffnen und mit Löchern zu versehen, mit denen die Ladegeräte an der Platte befestigt werden können. Hierzu muss sich aber das betreffende Gehäuse zerstörungsfrei öffnen und wieder schließen lassen, was nicht immer der Fall ist. Wenn dies möglich sein sollte, kann es aber sein, dass die Herstellergarantie infolge des Öffnens des Gehäuses erlischt. Darüber hinaus kann es infolge des Öffnens zu Beschädigungen der Ladeelektronik kommen. Im Endeffekt besteht in den meisten Fällen keine Möglichkeit der zentralen Anordnung der Ladegeräte.

Selbiges gilt sinngemäß auch für die Speicher, von denen zudem beim Öffnen eine nicht unwesentliche Gefahr für die betreffende Person ausgehen könnte.

Vorrichtungen zum Haltern und Ordnen von elektrischen Ladegeräten sind beispielsweise in der CN 206 650 477 U und der US 2008/0266117 A1 offenbart.

Aufgabe einer Ausführungsform der vorliegenden Erfindung ist es, eine Vorrichtung zum Haltern und Ordnen von elektrischen Ladegeräten vorzuschlagen, mit welcher es mit einfachen und kostengünstigen Mitteln möglich ist, eine Abhilfe für die oben genannten Nachteile zu schaffen und insbesondere eine Möglichkeit zu schaffen, um Ladegeräte und/oder Speicher unabhängig von ihrer Form und Größe haltern und ordnen zu können, ohne dabei deren Gehäuse öffnen zu müssen.

Diese Aufgabe wird mit den in Anspruch 1 angegebenen Merkmalen gelöst. Vorteilhafte Ausführungsformen sind Gegenstand der Unteransprüche.

Eine Ausführungsform der Erfindung betrifft eine Vorrichtung zum Haltern und Ordnen von elektrischen Ladegeräten, insbesondere zum Laden von Speichern für elektrische Energie von Werkzeugen, Garten- und Haushaltsgeräten sowie zum Haltern und Ordnen von derartigen Speichern, umfassend
- einen flächigen Grundkörper,
- zumindest eine Feststelleinrichtung, welche mit dem Grundkörper verbindbar oder verbunden ist, mit welcher das Ladegerät und/oder der Speicher kraft-, form- und/oder reibschlüssig lösbar am Grundkörper befestigbar ist.

Wenn im Folgenden von Ladegeräten die Rede ist, gelten die diesbezüglichen Feststellungen sinngemäß auch für den Speicher und umgekehrt, sofern nichts anderes vermerkt ist.

Die Feststelleinrichtung kann dabei so ausgestaltet sein, dass sie von außen mit dem Gehäuse des Ladegeräts oder des Speichers kraft-, form- und/oder reibschlüssig zusammenwirkt. Als Beispiel für eine kraftschlüssige Verbindung kann eine Verbindung mittels Saugnäpfe gelten. Das Ladegerät kann daher ohne ein Öffnen des Gehäuses am Grundkörper befestigt werden. Am Grundkörper kann eine beliebige Anzahl von Ladegeräten befestigt werden, sofern der Grundkörper eine ausreichend große Befestigungsfläche zur Verfügung stellt. Insofern ist ein zentrales Anordnen mehrerer Ladegeräte möglich, so dass ein aufwendiges Suchen entfällt.

Erfindungsgemäß umfasst die Vorrichtung eine Kabelführungseinrichtung zum Führen zumindest eines der Kabel des Ladegerätes. Wie eingangs erwähnt, müssen die Ladegeräte an das jeweilige Stromnetz angeschlossen werden. Die Kabelführungseinrichtung dient dazu, die Kabel der Ladegeräte so innerhalb der Vorrichtung führen zu können, dass diese insbesondere das Verbinden der Speicher mit den Ladegeräten nicht stören. Im einfachsten Fall können Kabelschellen oder Kabelklemmen verwendet werden. Nach Maßgabe einer weiteren Ausführungsform kann die Feststelleinrichtung
- zumindest eine Wandung, welche senkrecht auf dem Grundkörper befestigbar oder befestigt ist, wobei die Wandung einen Befestigungsraum begrenzt, in welchen zumindest ein Ladegerät oder zumindest ein Speicher einbringbar ist, und
- zumindest ein Befestigungsmittel umfassen, welches mit der Wandung zusammenwirkt und mit welchem das Ladegerät oder der Speicher form- und/oder reibschlüssig lösbar am Grundkörper befestigbar ist, wenn das Ladegerät oder der Speicher in den Befestigungsraum eingebracht ist.

Mit der Wandung kann eine gewisse Vorpositionierung des Ladegerätes oder des Speichers bewirkt werden, wodurch deren die Befestigung am Grundkörper vereinfacht wird. Das Befestigungsmittel kann beispielsweise Keile umfassen, welche zwischen das Ladegerät und die Wandung bewegt werden können, wodurch eine reibschlüssige Verbindung zwischen der Wandung und dem Ladegerät oder dem Speicher bereitgestellt wird. Die Wandung selbst kann beispielsweise auf den Grundkörper aufgeklebt oder aufgeschraubt sein. Eine einteilige Ausführungsform ist ebenfalls denkbar, in welcher die Wandung vom Grundkörper gebildet wird. Die Feststelleinrichtung kann nach Art eines Schnellspanners ausgestaltet sein.

In einer weitergebildeten Ausführungsform kann
- das Befestigungsmittel als eine Gewindestange oder Schraube ausgebildet sein, und
- die Wandung zumindest ein Gewinde bilden oder in der Wandung ein Gewinde angeordnet sein, in welches die Gewindestange oder die Schraube zum Befestigen des Ladegeräts oder des Speichers einschraubbar ist.

Das Befestigungsmittel kann in dieser Ausführungsform durch Drehen zum im Befestigungsraum angeordneten Ladegerät hin und von diesem wieder weg bewegt werden. Mit dem gewählten Anzugsmoment kann der Anpressdruck, mit welchem das Befestigungsmittel gegen das Gehäuse des Ladegeräts gedrückt wird, gewählt werden, um einen ausreichenden Reibschluss zu erzeugen. Sofern das Gehäuse entsprechende Ausnehmungen aufweist, in welche das Befestigungsmittel eingebracht werden kann, kann eine formschlüssige Verbindung bereitgestellt werden. Eine gewisse Beweglichkeit des Ladegeräts relativ zum Grundkörper im befestigten Zustand kann dabei hingenommen werden. Dabei bietet es sich an, mehrere Befestigungsmittel vorzusehen, so dass einerseits die benötigte, auf das Gehäuse wirkende Flächenpressung im Falle eines Reibschlusses gering zu halten, um eine zu starke Verformung des Gehäuses zu verhindern, und andererseits an unterschiedlichen Stellen auf das Gehäuse einzuwirken, wodurch die Lagerung des Ladegeräts verbessert wird. In vielen Fällen weist das Gehäuse eine zerklüftete Form, Wölbungen und/oder Schrägflächen auf. Da die als Schraube oder Gewindestange ausgebildeten Befestigungsmittel unabhängig voneinander und unterschiedlich weit in den Befestigungsraum eingebracht werden können, kann auf die jeweilige Form reagiert werden.

Bei einer weitergebildeten Ausführungsform kann die Gewindestange oder die Schraube einen Anlageabschnitt aufweisen, mit welchem die Gewindestange oder die Schraube mit dem Ladegerät oder dem Speicher insbesondere reibschlüssig zusammenwirkt. Der Anlageabschnitt kann beispielsweise tellerförmig ausgestaltet sein und verhindert eine zu hohe, auf das Gehäuse wirkende Flächenpressung und eine damit einhergehende Beschädigung desselben.

Bei einer weiteren Ausführungsform kann der Anlageabschnitt bewegbar an der Gewindestange oder der Schraube befestigt sein. Hierbei können sogenannte Kugeldruckschrauben zum Einsatz kommen. Der Anlageabschnitt kann sich in gewissen Grenzen der Ausrichtung des betreffenden Gegenabschnitts des Gehäuses, mit welchem er zum reibschlüssigen Befestigen des Ladegeräts oder des Speichers am Grundkörper zusammenwirkt, anpassen. Insofern kann eine zu hohe Flächenpressung am Gehäuse verhindert werden.

Eine weitergebildete Ausführungsform kann sich dadurch auszeichnen, dass
- der Grundkörper eine Mehrzahl von Befestigungsabschnitten aufweist, und
- die Wandung zumindest einen ersten Wandungsabschnitt und einen zweiten Wandungsabschnitt umfasst, wobei
- der erste Wandungsabschnitt und/oder der zweite Wandungsabschnitt mit jeweils einen der Befestigungsabschnitte am Grundkörper befestigbar oder befestigt sind.

Die Position des ersten Wandungsabschnitts und des zweiten Wandungsabschnitts relativ zueinander und folglich der Abstand zwischen den Wandungsabschnitten können in dieser Ausführungsform verändert werden. Die Größe des Befestigungsraums kann entsprechend geändert und an die Größe des betreffenden Ladegeräts angepasst werden. Infolgedessen kann der Abstand zwischen den Wandungsabschnitten und dem Ladegerät gering gehalten werden, wodurch das Befestigen und das Lösen des Ladegeräts am bzw. vom Grundkörper vereinfacht werden. Die auf die Befestigungsmittel wirkende Biegebelastung kann entsprechend gering gehalten werden. Darüber hinaus kann der vom Grundkörper bereitgestellte Platz effektiv genutzt werden, so dass eine hohe Anzahl von Ladegeräten am Grundkörper befestigt werden kann.

Nach Maßgabe einer weiteren Ausführungsform können
- die Befestigungsabschnitte als Löcher ausgebildet sein oder diese umfassen, und
- der erste Wandungsabschnitt und/oder der zweite Wandungsabschnitt jeweils zumindest einen Verbindungsvorsprung aufweisen, welcher zum lösbaren Verbinden mit dem Grundkörper in eines der Löcher einbringbar ist.

Der Grundkörper kann nach Art einer Lochplatte ausgebildet sein. Die Verbindungsvorsprünge können ähnlich wie Passstifte oder Holzdübel ausgeführt sein, die beispielsweise reibschlüssig in die Löcher des Grundkörpers eingebracht werden können. Auf diese Weise können die Wandungsabschnitte auf einfache Weise lösbar mit dem Grundkörper verbunden und wieder von diesem gelöst werden.

Nach Maßgabe einer weiteren Ausführungsform können
- die Befestigungsabschnitte als Führungsnuten ausgebildet sein und
- der erste Wandungsabschnitt und/oder der zweite Wandungsabschnitt jeweils zumindest einen Verbindungsvorsprung aufweisen, welcher zum lösbaren Verbinden mit dem Grundkörper in eine der Führungsnuten einbringbar ist.

Die Führungsnuten können beispielsweise als Schwalbenschwanz-Nuten ausgeführt sein, in welche die komplementär gestalteten Verbindungsvorsprünge eingebracht werden können. Die Wandungsabschnitte können entlang der Führungsnuten verschoben und beispielsweise mit Feststellschrauben in der gewünschten Position fixiert werden. Da die Wandungsabschnitte an beliebigen Stellen innerhalb der Führungsnuten angeordnet werden können, kann der Abstand zwischen den Wandungsabschnitten und dem Ladegerät minimiert werden. Es ist möglich, eine reibschlüssige Verbindung zwischen den Wandungsabschnitten und dem Gehäuse des betreffenden Ladegeräts bereitzustellen. Diese Ausführungsform eignet sich insbesondere dann, wenn das Gehäuse ebene Abschnitte aufweist, an denen die Wandungsabschnitte mit dem Gehäuse in Kontakt treten können.

Bei einer weiteren Ausführungsform kann es sich anbieten, dass
- am Grundkörper zumindest eine Gewindespindel gelagert ist, und
- die Wandung zumindest einen ersten Wandungsabschnitt und einen zweiten Wandungsabschnitt umfasst, wobei
- der erste Wandungsabschnitt mit der Gewindespindel relativ zum zweiten Wandungsabschnitt bewegbar ist.

In dieser Ausführungsform umfasst das Befestigungsmittel eine Gewindespindel. Auch hier kann eine reibschlüssige Verbindung direkt zwischen dem Wandungsabschnitt und dem Gehäuse auf bequeme Weise erzeugt werden.

In einer weitergebildeten Ausführungsform kann
- der Grundkörper
   o eine Befestigungsfläche und eine dieser gegenüberliegende Rückfläche oder
   o eine Befestigungsfläche, eine dieser gegenüberliegende Rückfläche und zumindest eine diese verbindende Seitenfläche aufweisen, wobei
- auf der Rückfläche und/oder der Seitenfläche zumindest ein Abstandshalter angeordnet ist, mit welchem ein Zwischenraum zwischen der Rückfläche und einem benachbart angeordneten Gegenstand geschaffen werden kann, und
- die Kabelführungseinrichtung im Zwischenraum angeordnet werden kann, sich in den Zwischenraum erstreckt oder vom Zwischenraum gebildet wird.

Bei dem benachbart angeordneten Gegenstand handelt es sich insbesondere um eine Wand, eine Platte oder einen Tisch. Mit den Abstandshaltern wird ein Zwischenraum zwischen dem benachbart angeordneten Gegenstand und dem Grundkörper bereitgestellt, innerhalb welchem die Kabel der Ladegeräte geführt werden können, ohne dass sie das Verbinden der Speicher mit den Ladegeräten stören.

Bei einer weitergebildeten Ausführungsform kann die Kabelführungseinrichtung zumindest eine sich von der Befestigungsfläche zur Rückfläche erstreckende Durchgangsbohrung umfassen.

Das betreffende Kabel des Ladegeräts kann durch diese Durchgangsbohrung in den Zwischenraum geführt werden. Derjenige Teil des Kabels, welcher entlang der Befestigungsfläche verläuft, kann hierdurch kurz gehalten werden, weshalb die störende Wirkung des Kabels und der Platzbedarf gering gehalten werden.

Bei einer weiteren Ausführungsform kann die Durchgangsbohrung mittels eines Verschlusskörpers teilweise verschließbar sein. Dieser Verschlusskörper kann nach Art einer Kabeldurchführung gestaltet sein, wie sie von Schreibtischen bekannt ist. Hiermit wird insbesondere eine optisch ansprechende Wirkung erreicht.

Bei einer weitergebildeten Ausführungsform kann die Feststelleinrichtung und/oder der Grundkörper eine Magneteinheit aufweisen, mit welcher das Ladegerät oder der Speicher kraftschlüssig am Grundkörper befestigbar ist. Die Verwendung einer Magneteinheit hat insbesondere den Vorteil, dass keine Befestigungselemente angezogen oder gelöst werden müssen, um das Ladegerät oder den Speicher mit dem Grundkörper zu verbinden bzw. hiervon zu trennen. Insofern kann die Vorrichtung sehr einfach verwendet werden.

Bei einer weiteren Ausführungsform kann die Magneteinheit einen Magnet und einen magnetisierten oder magnetisierbaren Gegenkörper umfassen, wobei
- der Magnet am Grundkörper und
- der Gegenkörper am Ladegerät oder am Speicher befestigt oder befestigbar ist oder umgekehrt, oder
- der Magnet oder der Gegenkörper vom Grundkörper gebildet wird, wobei
- der Magnet und der Gegenkörper in kraftschlüssige Wechselwirkung bringbar sind.

Der Magnet und/oder der Gegenkörper können mittels doppelseitiger Klebebänder am Grundkörper bzw. am Ladegerät oder am Speicher befestigt werden. Doppelseitige Klebebänder können auch eine dickere flexible Schaumschicht aufweisen. Nicht immer weisen die Ladegeräte oder die Speicher ebene Flächen auf, an denen der Magnet oder der Gegenkörper befestigt werden können. Aufgrund der Schaumschicht können in gewissen Grenzen Wölbungen und/oder Vertiefungen überbrückt werden, so dass der gesamte Magnet oder der gesamte Gegenkörper auf zuverlässige Weise am Ladegerät oder am Speicher befestigt werden können.

Wenn der Grundkörper zumindest abschnittsweise aus einem ferromagnetischen Material, beispielsweise Stahl, gefertigt ist, kann dieser auch die Funktion des Gegenkörpers übernehmen.

Nach Maßgabe einer weiteren Ausführungsform kann der Magnet oder der Gegenkörper unter Verwendung eines oder mehrerer der Befestigungsabschnitte am Grundkörper befestigbar sein. Wie erwähnt, können die Befestigungsabschnitte beispielsweise die Löcher des ähnlich einer Lochplatte ausgestalteten Grundkörpers umfassen. Der Magnet oder der Gegenkörper können nach Art eines Stopfens ausgebildet sein, der unter Ausbildung eines Reibschlusses in die Löcher eingebracht werden kann. Alternativ können die Löcher auch mit Gewinden versehen sein, in welchen die mit einem Gegengewinde versehenen Stopfen eingeschraubt werden können. Insbesondere dann, wenn die Stopfen einschraubbar sind, kann mittels der Einschraubtiefe die zwischen dem Magnet und dem Gegenkörper wirkende Magnetkraft eingestellt werden. Hierbei wird der Umstand ausgenutzt, dass die wirkende Magnetkraft vom Abstand zwischen dem Magnetkörper und dem Gegenkörper abhängt und mit zunehmendem Abstand deutlich abfällt.

In einer weiteren Ausführungsform umfasst die Vorrichtung zumindest eine Steckdose oder eine Steckdosenleiste mit zwei oder mehreren Steckdosen, welche lösbar mit dem Grundkörper befestigbar sind. In dieser Ausführungsform kann der Stecker des Ladegeräts innerhalb der Vorrichtung in die hier angeordnete Steckdose gesteckt werden. Die Führung des Kabels und des daran befestigten Steckers kann hierdurch erleichtert werden.

Gemäß einer weiteren Ausführungsform können die Steckdosen der Steckdosenleiste einzeln schaltbar sein. Somit kann jeder Speicher, der mit dem Grundkörper verbunden ist oder dessen Ladegerät mit dem Grundkörper verbunden ist, einzeln geladen werden. Bereits vollständig aufgeladene Speicher können infolge einer entsprechenden Schaltung der Steckdosenleiste vom Stromnetz getrennt werden, wodurch der Speicher geschont werden kann und Verlustströme vermieden werden können.

Beispielhafte Ausführungsformen der Erfindung werden im Folgenden unter Bezugnahme auf die beigefügten Zeichnungen näher erläutert. Es zeigen
- Figur 1A: ein erstes Ausführungsbeispiel einer Vorrichtung zum Haltern und Ordnen von elektrischen Ladegeräten anhand einer prinzipiellen Draufsicht,
- Figur 1B: eine Schnittdarstellung des ersten Ausführungsbeispiels entlang der in Figur 1A definierten Schnittebene A-A,
- Figur 2: eine prinzipielle Darstellung eines Befestigungsmittels, welches für die Vorrichtung verwendet werden kann,
- Figur 3: ein zweites Ausführungsbeispiel der Vorrichtung anhand einer prinzipiellen Draufsicht.
- Figur 4: ein drittes Ausführungsbeispiel der Vorrichtung anhand einer prinzipiellen Schnittdarstellung in Anlehnung an Figur 1B, und
- Figur 5: ein viertes Ausführungsbeispiel der Vorrichtung anhand einer prinzipiellen Schnittdarstellung in Anlehnung an Figur 1B.

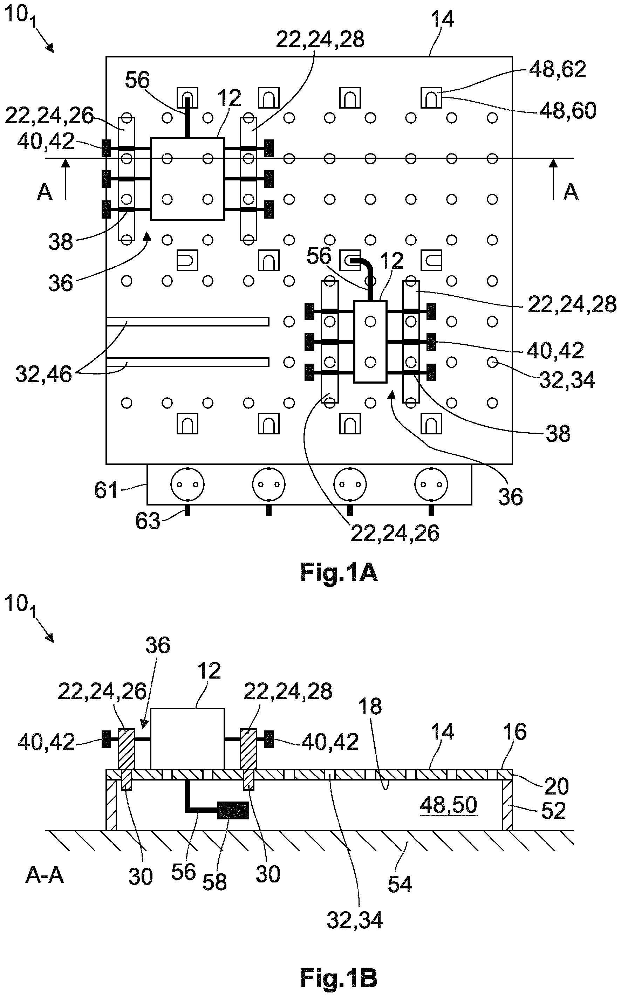

In den Figuren 1A und 1B ist ein erstes Ausführungsbeispiel einer Vorrichtung 10₁ zum Haltern und Ordnen von elektrischen Ladegeräten 12 anhand von prinzipiellen Darstellungen gezeigt. Die Vorrichtung 10₁ umfasst einen flächigen Grundkörper 14, der plattenförmig ausgestaltet sein kann. Der Grundkörper 14 weist eine Befestigungsfläche 16 und eine gegenüberliegende Rückfläche 18 auf. Die Befestigungsfläche 16 und die Rückfläche 18 sind mittels einer Seitenfläche 20 miteinander verbunden (siehe insbesondere Figur 1B).

Zudem weist die Vorrichtung 10₁ eine Feststelleinrichtung 22 auf, mit welcher ein elektrisches Ladegerät 12 am Grundkörper 14 befestigt werden kann. Die Feststelleinrichtung 22 umfasst im ersten Ausführungsbeispiel eine Wandung 24 mit einem ersten Wandungsabschnitt 26 und einem zweiten Wandungsabschnitt 28. Die Wandungsabschnitte 26, 28 sind jeweils mit zumindest zwei Verbindungsvorsprüngen 30 ausgestattet, die nach Art eines Holzdübels ausgestaltet sein können.

Der Grundkörper 14 verfügt über eine Vielzahl von Befestigungsabschnitten 32, welche als Löcher 34 ausgebildet sind. Im ersten Ausführungsbeispiel gehen die Löcher 34 von der Befestigungsfläche 16 aus und durchlaufen den Grundkörper 14 bis hin zur Rückfläche 18, weshalb der Grundkörper 14 nach Art einer Lochplatte ausgestaltet ist.

Zum Befestigen der Wandungsabschnitte 26, 28 werden die Verbindungsvorsprünge 30 in die Befestigungsabschnitte 32 eingebracht, wo eine reibschlüssige Verbindung geschaffen wird. Die Wandungsabschnitte 26, 28 verlaufen im befestigten Zustand senkrecht zum Grundkörper 14.

Die Wandung 24, in diesem Fall der erste Wandungsabschnitt 26 und der zweite Wandungsabschnitt 28, begrenzen im montierten Zustand einen Befestigungsraum 36, in welchen ein Ladegerät 12 einbringbar ist. Je nach Größe des Ladegeräts 12 können die Wandungsabschnitte 26, 28 mit einem entsprechenden Abstand zueinander auf dem Grundkörper 14 angeordnet werden. In Figur 1A sind zwei Ladegeräte 12 erkennbar, die eine unterschiedliche Breite aufweisen. Entsprechend ist der Abstand des ersten Wandungsabschnitts 26 und des zweiten Wandungsabschnitts 28 zueinander bei den beiden Ladegeräten 12 unterschiedlich.

In der Wandung 24 ist ein Gewinde 38 vorgesehen, welches beispielsweise von einer Gewindehülse gebildet sein kann, die in die Wandung 24 eingefügt ist. Abhängig vom verwendeten Material der Wandung 24 kann das Gewinde 38 auch in dieselbe geschnitten werden, so dass das Gewinde 38 von der Wandung 24 gebildet wird.

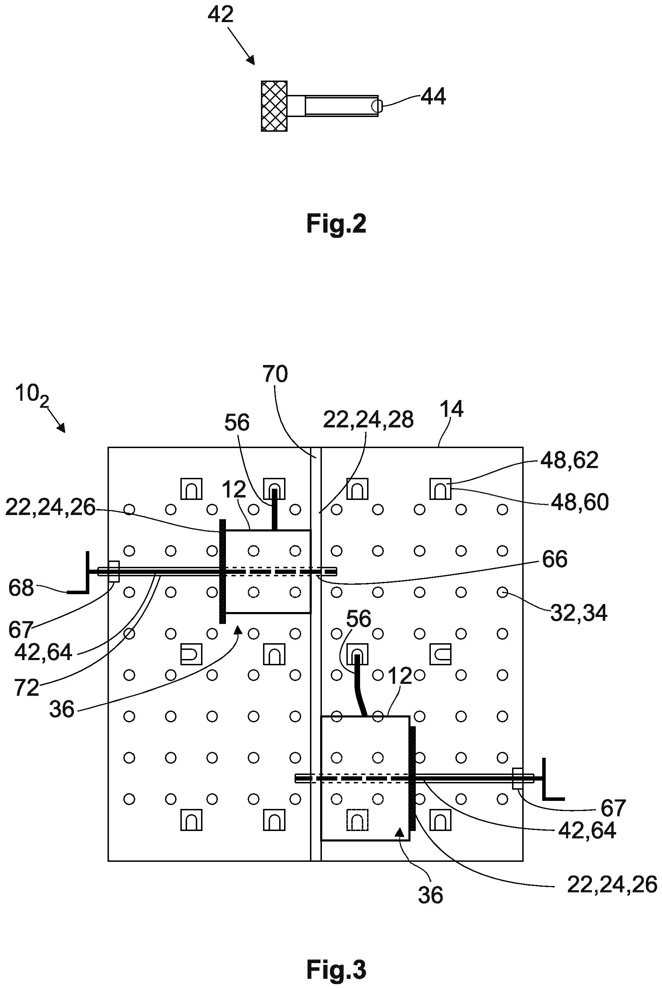

In der Wandung 24 sind Befestigungsmittel 40 gelagert. Alternativ können die Befestigungsmittel 40 an der Wandung 24 befestigt sein. Im dargestellten Ausführungsbeispiel sind die Befestigungsmittel 40 als Schrauben 42 ausgestaltet, die beispielsweise so ausgeführt sein können wie die in Figur 2 dargestellte Schraube 42. Die Schraube 42 wird in das Gewinde 38 eingeschraubt, wobei das Gewinde 38 so ausgerichtet ist, dass die Schraube 42 in den Befestigungsraum 36 eingebracht werden kann. Zunächst wird das Ladegerät 12 innerhalb des Befestigungsraums 36, hier zwischen dem ersten Wandungsabschnitt 26 und dem zweiten Wandungsabschnitt 28, positioniert. Anschließend wird die Schraube 42 durch Drehen so weit in den Befestigungsraum 36 eingebracht, bis dass sie in Kontakt mit dem Gehäuse des Ladegeräts 12 kommt. Im dargestellten ersten Ausführungsbeispiel sind jeweils drei Gewinde 38 pro Wandungsabschnitt 26, 28 vorgesehen, so dass insgesamt sechs Schrauben 42 in den Befestigungsraum 36 eingebracht werden können. Die drei Schrauben 42 des ersten Wandungsabschnitts 26 werden dabei in entgegengesetzte Richtung zu den Schrauben 42 des zweiten Wandungsabschnitts 28 in den Befestigungsraum 36 eingebracht. Aufgrund der zwischen den Schrauben 42 und dem Gehäuse des Ladegeräts 12 wirkenden Reibung wird das Ladegerät 12 gegenüber dem Grundkörper 14 befestigt. Je nach Form des Gehäuses kann auch ein Formschluss bereitgestellt werden, beispielsweise dann, wenn zumindest eine der Schrauben 42 in eine Ausnehmung des Gehäuses eingebracht wird.

Die Schraube 42 nach dem in Figur 2 dargestellten Ausführungsbeispiel ist als eine sogenannte Kugeldruckschraube ausführt, bei welcher ein Anlageabschnitt 44 von einem kugelförmigen Körper gebildet wird, der bewegbar im Schaft der Schraube 42 gelagert ist. Infolge der Bewegbarkeit kann sich der Anlageabschnitt 44 nach dem betreffenden Gegenabschnitt des Gehäuses des Ladegeräts 12 ausrichten und so eine hohe Punktbelastung mit einer hiermit einhergehenden hohen Flächenpressung verhindern. Zum manuellen Drehen der Schraube 42 ist diese nach Art einer Rändelschraube ausgebildet. Die Verwendung eines Werkzeugs ist nicht notwendig.

Es können aber auch Gewindestangen zum Einsatz kommen. Die Gewindestangen können beispielsweise eine Ausnehmung nach Art eines Innensechskants aufweisen, in welche ein komplementär ausgebildeter Sechskantschlüssel eingebracht werden kann (nicht dargestellt), um die Gewindestange zu drehen.

In Figur 1A sind ebenfalls Befestigungsabschnitte 32 erkennbar, die als Führungsnuten 46 ausgestaltet sind. Die Führungsnuten 46 gehen von der Seitenfläche 20 aus und verlaufen innerhalb des Grundkörpers 14 und sind zur Befestigungsfläche 16 hin geöffnet. Je nach Ausgestaltung können die Führungsnuten 46 auch zur Rückfläche 18 hin geöffnet sein, was aber nicht zwingend der Fall sein muss. In diesem Fall sind die Verbindungsvorsprünge 30 der Wandungsabschnitte 26, 28 komplementär zum Querschnitt der Führungsnuten 46 ausgebildet (nicht dargestellt), so dass diese von der Seitenfläche 20 aus in die Führungsnuten 46 eingebracht werden können. In den Verbindungsvorsprüngen 30 können Feststellschrauben vorgesehen sein, mit welchen die Wandungsabschnitte 26, 28 an der gewünschten Stelle innerhalb der Führungsnuten 46 gegenüber dem Grundkörper 14 verspannt und damit in ihrer Position fixiert werden können (nicht dargestellt).

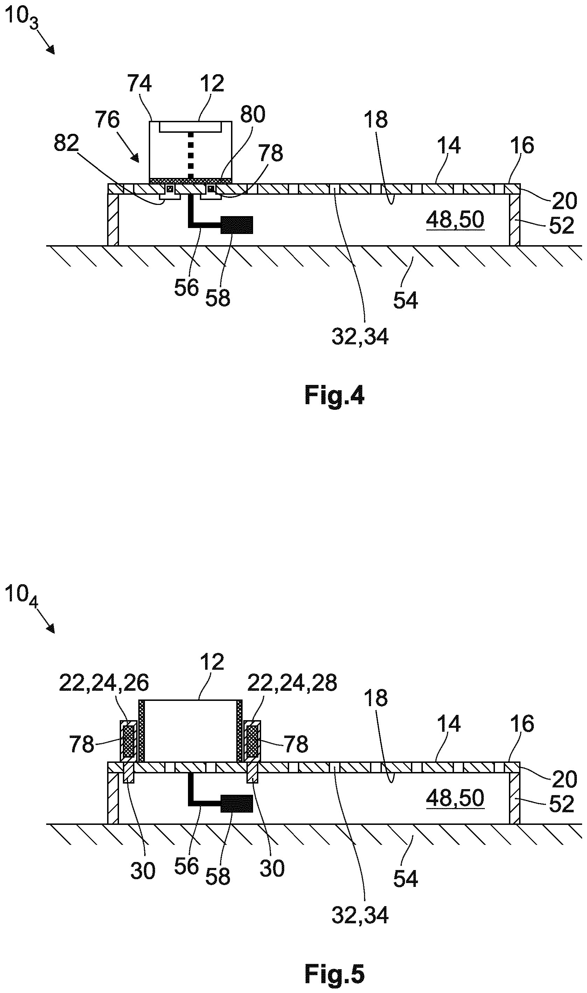

Darüber hinaus umfasst die Vorrichtung 10₁ eine Kabelführungseinrichtung 48, mit welcher zumindest ein Kabel 56 eines der am Grundkörper 14 befestigten Ladegeräte 12 geführt werden kann. Im dargestellten ersten Ausführungsbeispiel der Vorrichtung 10₁ umfasst die Kabelführungseinrichtung 48 einen Zwischenraum 50, der von einem Abstandshalter 52 bereitgestellt und teilweise begrenzt wird (siehe Figur 1B). Der Abstandshalter 52 ist an der Rückfläche 18 angeordnet und hält den Grundkörper 14 auf Abstand zu einem benachbart zu diesem angeordneten Gegenstand, beispielsweise zu einer Wand 54 oder einer parallel zum Grundkörper 14 verlaufenden Platte 54. Die Platte 54 kann Teil der Vorrichtung 10₁ sein. Der Abstand ist so gewählt, dass ein Kabel 56 des betreffenden Ladegeräts 12 und ein mit dem Kabel 56 verbundener Stecker 58 durch den Zwischenraum 50 bewegt werden können. Weiterhin umfasst die Kabelführungseinrichtung 48 eine Mehrzahl von Durchgangsbohrungen 60, welche sich zwischen der Befestigungsfläche 16 und der Rückfläche 18 erstrecken und folglich den Grundkörper 14 vollständig durchlaufen. Die Durchgangsbohrungen 60 münden daher direkt in den Zwischenraum 50. Das Kabel 56 und der mit diesem verbundene Stecker 58 eines Ladegeräts 12 können durch eine in der Nähe des am Grundkörper 14 befestigten Ladegerätes angeordnete Durchgangsbohrung geführt und in den Zwischenraum 50 eingebracht werden. Von dort aus kann das Kabel 56 zu einer Steckdose oder einer Steckdosenleiste 61 geführt werden. Die in Figur 1A gezeigte Steckdosenleiste umfasst vier Steckdosen, welche jeweils einzeln mit einem Schalter schaltbar sind. Folglich kann jeder Speicher (vgl. Figur 4) individuell geladen und vom Stromnetz getrennt werden.

Die Durchgangsbohrungen 60 können mit jeweils einem Verschlusskörper 62 zumindest teilweise verschlossen werden. Dieser Verschlusskörper 62 kann nach Art einer Kabeldurchführung gestaltet sein, wie sie von Schreibtischen bekannt ist. Hiermit wird insbesondere eine optisch ansprechende Wirkung erreicht und das Kabel 56 fixiert.

Die Vorrichtung 10₁ eignet sich dafür, auf einer Platte 54 und/oder an einer Wand 54 montiert zu werden. Die hierfür benötigten Befestigungselemente sind nicht dargestellt, können aber beispielsweise Laschen umfassen, durch welche Schrauben 42 geführt werden können. Andere Befestigungselemente wie Winkel und dergleichen können ebenfalls verwendet werden.

In Figur 3 ist ein zweites Ausführungsbeispiel der Vorrichtung 10₂ anhand einer prinzipiellen Draufsicht gezeigt. Gemäß dem zweiten Ausführungsbeispiel umfasst das Befestigungsmittel 42 als eine Gewindespindel 64 implementiert, welche an einem ersten ist Lagerungsabschnitt 66 und einem zweiten Lagerungsabschnitt 67 drehbar am Grundkörper 14 gelagert ist. Der erste Lagerungsabschnitt 66 wird dabei von einer zentralen Lagerungswandung 70 gebildet, welche mittig auf der Rückfläche 18 des Grundkörpers 14 angeordnet ist und somit in Figur 3 vom Grundkörper 14 verdeckt wird. Der zweite Lagerungsabschnitt 67 ist ebenfalls auf der Rückfläche 18 und in der Nähe zur Seitenfläche 20 angeordnet. Der zweite Lagerungsabschnitt 67 kann auch in den Abstandshalter 52 integriert sein. Der Grundkörper 14 weist einen parallel zur Gewindespindel 64 verlaufenden Durchbruch 72 auf. Mittels eines nicht näher dargestellten Verbindungsstücks ist die Gewindespindel 64 mit einem ersten Wandungsabschnitt 26 verbunden, der infolge einer Drehung der Gewindespindel 64 entlang derselben und entlang des Durchbruchs 72 verschoben werden kann. Ein zweiter Wandungsabschnitt 28, der fest am Grundkörper 14 verbunden ist und von der Befestigungsfläche 16 ausgeht, verläuft parallel zum ersten Wandungsabschnitt 26 und fluchtet mit der Lagerungswandung 70. Das Ladegerät 12 wird, wie auch im ersten Ausführungsbeispiel, in den Befestigungsraum 36 eingebracht, welcher vom ersten Wandungsabschnitt 26 und vom zweiten Wandungsabschnitt 28 begrenzt wird. Dann wird die Gewindespindel 64 unter Verwendung einer Kurbel 68 in Drehung versetzt, infolgedessen sich der erste Wandungsabschnitt 26 zum zweiten Wandungsabschnitt 28 hin bewegt. Ab einer gewissen Stellung des ersten Wandungsabschnitt 26 in Bezug auf den zweiten Wandungsabschnitt 28 liegt das Ladegerät 12 sowohl am ersten Wandungsabschnitt 26 als auch am zweiten Wandungsabschnitt 28 an. Das Ladegerät 12 wird zwischen dem ersten Wandungsabschnitt 26 und dem zweiten Wandungsabschnitt 28 verklemmt und folglich reibschlüssig am Grundkörper 14 befestigt. Die endgültige Position des Ladegeräts 12 am Grundkörper 14 liegt damit fest. Anschließend kann das Kabel 56 zusammen mit dem Stecker 58 durch eine benachbart angeordnete Durchgangsbohrung 60 und dann in den Zwischenraum 50 geführt werden. Sofern gewünscht, kann die Durchgangsbohrung mit dem Verschlusskörper 62 verschlossen werden, wie auch in den Figuren dargestellt.

In Figur 4 ist ein drittes Ausführungsbeispiel der erfindungsgemäßen Vorrichtung 10₃ anhand einer prinzipiellen Darstellung gezeigt. Der Aufbau der Vorrichtung 10₃ nach dem dritten Ausführungsbeispiel entspricht dabei weitgehend dem Aufbau der Vorrichtung 10₃ nach dem ersten Ausführungsbeispiel, weshalb im Folgenden nur auf die wesentlichen Unterschiede eingegangen wird. Im dritten Ausführungsbeispiel ist nicht das Ladegerät 12, sondern ein Speicher 74 mit dem Grundkörper 14 verbunden. In einigen Fällen ist der Speicher 74 deutlich größer als das Ladegerät 12, so dass es sich anbietet, nicht das Ladegerät 12, sondern den Speicher 74 mit dem Grundkörper 14 zu verbinden. In Figur 4 ist das Ladegerät 12 mit dem Speicher 74 gekoppelt.

Im dritten Ausführungsbeispiel umfasst die Vorrichtung 10₃ eine Magneteinheit 76, mit welcher der Speicher 74 kraftschlüssig und lösbar mit dem Grundkörper 14 verbunden ist. Die Magneteinheit 76 umfasst in diesem Fall zwei Magnete 78, die in jeweils einem Stopfen 82 angeordnet sind, der reibschlüssig in die Löcher 34 des Grundkörpers 14 eingebracht werden kann. Die Magnete 78, beispielsweise aus Neodym, können aber auch auf andere Weise mit dem Grundkörper 14 verbunden werden. Beispielsweise können die Stopfen 82 mit einem Gewinde versehen und in ein mit einem Gegengewinde versehenen Loch 34 eingeschraubt werden (nicht gezeigt).

Ein magnetischer oder magnetisierbarer Gegenkörper 80, beispielsweise aus einem ferromagnetischen Material, ist mit dem Speicher 74 verbunden, wozu ein hier nicht näher gezeigtes doppelseitiges Klebeband eingesetzt werden kann. Wie unter anderem aus der Figur 1A hervorgeht, überdeckt ein Ladegerät 12 oder ein Speicher 74 üblicherweise mehrere Löcher 34. Folglich kann mit der Anzahl der Stopfen 82, welche in die überdeckten Löcher 34 eingesetzt werden, die zwischen dem Magnet 78 oder den Magneten und dem Gegenkörper 80 wirkende Magnetkraft erhöht oder vermindert werden. Aufgrund der ausgeprägten Abhängigkeit der wirkenden Magnetkraft vom Abstand zwischen dem Magnet 78 und dem Gegenkörper 80 kann die Magnetkraft auch dadurch verändert werden, dass der Stopfen 82 mehr oder weniger weit in das betreffende Loch 34 eingeschoben oder eingeschraubt wird.

Wenn der Grundkörper 14 aus einem Kunststoff beispielsweise spritzgegossen wird, kann der Magnet 78 umspritzt werden. Dabei bietet es sich an, dass der Magnet 78 bündig mit der Befestigungsfläche 16 abschließt und daher sichtbar ist.

Figur 5 zeigt ein viertes Ausführungsbeispiel der Vorrichtung 10₄. Hier wird das Ladegerät 12 wiederum unter Verwendung der Magneteinheit 76 kraftschlüssig mit dem Grundkörper 14 verbunden. In diesem Ausführungsbeispiel ist der Magnet 78 in der Wandung 24 der Feststelleinrichtung 22 angeordnet, wohingegen der Gegenkörper 80 beispielsweise mit einem doppelseitigen Klebeband mit dem Ladegerät 12 verbunden ist. Konkret ist ein erster Magnet 78 im ersten Wandungsabschnitt 26 und ein zweiter Magnet 78 im zweiten Wandungsabschnitt 28 angeordnet und jeweils ein Gegenkörper 80 am Ladegerät 12 befestigt, so dass an zwei Stellen eine Magnetkraft wirkt.

Bei einem nicht dargestellten Ausführungsbeispiel wird davon ausgegangen, dass bezugnehmend auf die Figuren 1A und 1B die Vorrichtung 10 an einer senkrecht verlaufenden Wand 54 befestigt ist. Die Steckdosenleiste 61 ist dabei am unteren Ende des Grundkörpers 14 angeordnet. Infolge dieser Anordnung wirkt die Gewichtskraft in Richtung der Steckdosenleiste 61 und parallel zur Befestigungsfläche 16. Beispielsweise der erste Wandungsabschnitt 26 ist nach Art eines Regalbodens so mit dem Grundkörper 14 befestigt, dass er parallel zur Steckdosenleiste 61 und senkrecht zur Befestigungsfläche 16 verläuft. Folglich kann der Speicher 74 oder das Ladegerät 12 auf dem ersten Wandungsabschnitt 26 abgelegt werden. Zur Stabilisierung kann der Magnet 78 wie in Figur 5 gezeigt im ersten Wandungsabschnitt 26 angeordnet sein, wobei dieser im Vergleich zum in Figur 5 dargestellten vierten Ausführungsbeispiel geringer dimensioniert werden kann, da der erste Wandungsabschnitt 26 zumindest den Großteil des Gewichts des Ladegeräts 12 trägt. Zur weiteren Stabilisierung kann ein weiterer Magnet 78 wie im in Figur 4 gezeigten dritten Ausführungsbeispiel am Grundkörper 14 befestigt sein. Je nach Größe, Form und Gewicht des Ladegeräts 12 oder des Speichers 74 kann der erste Wandungsabschnitt 26 auch ohne den Magnet 78 ausgebildet sein.

### Bezugszeichenliste

- 10: Vorrichtung
- 10₁: Vorrichtung
- 10₂: Vorrichtung
- 10₃: Vorrichtung
- 10₄: Vorrichtung
- 12: Ladegerät
- 14: Grundkörper
- 16: Befestigungsfläche
- 18: Rückfläche

- 20: Seitenfläche
- 22: Feststelleinrichtung
- 24: Wandung
- 26: erster Wandungsabschnitt
- 28: zweiter Wandungsabschnitt

- 30: Verbindungsvorsprung
- 32: Befestigungsabschnitt
- 34: Loch
- 36: Befestigungsraum
- 38: Gewinde

- 40: Befestigungsmittel
- 42: Schraube
- 44: Anlageabschnitt
- 46: Führungsnut
- 48: Kabelführungseinrichtung

- 50: Zwischenraum
- 52: Abstandshalter
- 54: Wand, Platte
- 56: Kabel
- 58: Stecker

- 60: Durchgangsbohrung
- 61: Steckdosenleiste
- 62: Verschlusskörper
- 63: Schalter
- 64: Gewindespindel
- 66: erster Lagerungsabschnitt
- 67: zweiter Lagerungsabschnitt
- 68: Kurbel

- 70: Lagerungswandung
- 72: Durchbruch
- 74: Speicher
- 76: Magneteinheit
- 78: Magnet
- 80: Gegenkörper
- 82: Stopfen

## Patentansprüche

1. Vorrichtung (10) zum Haltern und Ordnen von elektrischen Ladegeräten (12), insbesondere zum Laden von Speichern für elektrische Energie von Werkzeugen, Garten- und Haushaltsgeräten, sowie zum Haltern und Ordnen von derartigen Speichern, umfassend
- einen flächigen Grundkörper (14), und
- zumindest eine Feststelleinrichtung (22), welche mit dem Grundkörper (14) verbindbar oder verbunden ist, und mit welcher das Ladegerät (12) und/oder der Speicher (74) kraft-, form- und/oder reibschlüssig lösbar am Grundkörper (14) befestigbar ist,
**dadurch gekennzeichnet, dass** die Vorrichtung (10) eine Kabelführungseinrichtung (48) zum Führen zumindest eines der Kabel (56) des Ladegerätes (12) umfasst.

2. Vorrichtung (10) nach Anspruch 1,
**dadurch gekennzeichnet, dass** die Feststelleinrichtung (22)
- zumindest eine Wandung (24), welche senkrecht auf dem Grundkörper (14) befestigbar oder befestigt ist, wobei die Wandung (24) einen Befestigungsraum (36) begrenzt, in welche zumindest ein Ladegerät (12) oder zumindest ein Speicher (74) einbringbar ist, und
- zumindest ein Befestigungsmittel (40) umfasst, welches mit der Wandung (24) zusammenwirkt und mit welchem das Ladegerät (12) oder der Speicher (74) form- und/oder reibschlüssig lösbar am Grundkörper (14) befestigbar ist, wenn das Ladegerät (12) oder der Speicher (74) in den Befestigungsraum (36) eingebracht ist.

3. Vorrichtung (10) nach Anspruch 2,
**dadurch gekennzeichnet, dass**
- das Befestigungsmittel (40) als eine Gewindestange oder Schraube (42) ausgebildet ist, und
- die Wandung (24) zumindest ein Gewinde (38) bildet oder in der Wandung (24) ein Gewinde (38) angeordnet ist, in welches die Gewindestange oder die Schraube (42) zum Befestigen des Ladegeräts (12) oder des Speichers (74) einschraubbar ist.

4. Vorrichtung (10) nach Anspruch 3,
**dadurch gekennzeichnet, dass** die Gewindestange oder die Schraube (42) einen Anlageabschnitt (44) aufweist, mit welchem die Gewindestange oder die Schraube (42) mit dem Ladegerät (12) oder der Speicher (74) insbesondere reibschlüssig zusammenwirkt.

5. Vorrichtung (10) nach Anspruch 4,
**dadurch gekennzeichnet, dass** der Anlageabschnitt (44) bewegbar an der Gewindestange oder der Schraube (42) befestigt ist.

6. Vorrichtung (10) nach einem der Ansprüche 2 bis 5,
**dadurch gekennzeichnet, dass**
- der Grundkörper (14) eine Mehrzahl von Befestigungsabschnitten (32) aufweist, und
- die Wandung (24) zumindest einen ersten Wandungsabschnitt (26) und einen zweiten Wandungsabschnitt (28) umfasst, wobei
- der erste Wandungsabschnitt (26) und/oder der zweite Wandungsabschnitt (28) mit jeweils einen der Befestigungsabschnitte (32) am Grundkörper (14) befestigbar oder befestigt sind.

7. Vorrichtung (10) nach Anspruch 6,
**dadurch gekennzeichnet, dass**
- die Befestigungsabschnitte (32) als Löcher (34) ausgebildet sind oder diese umfassen, und
- der erste Wandungsabschnitt (26) und/oder der zweite Wandungsabschnitt (28) jeweils zumindest einen Verbindungsvorsprung (30) aufweisen, welcher zum lösbaren Verbinden mit dem Grundkörper (14) in eines der Löcher (34) einbringbar ist.

8. Vorrichtung (10) nach Anspruch 6,
**dadurch gekennzeichnet, dass**
- die Befestigungsabschnitte (32) als Führungsnuten (46) ausgebildet sind und
- der erste Wandungsabschnitt (26) und/oder der zweite Wandungsabschnitt (28) jeweils zumindest einen Verbindungsvorsprung (30) aufweisen, welcher zum lösbaren Verbinden mit dem Grundkörper (14) in eine der Führungsnuten (46) einbringbar ist.

9. Vorrichtung (10) nach einem der Ansprüche 2 bis 5,
**dadurch gekennzeichnet, dass**
- am Grundkörper (14) zumindest eine Gewindespindel (64) gelagert ist, und
- die Wandung (24) zumindest einen ersten Wandungsabschnitt (26) und einen zweiten Wandungsabschnitt (28) umfasst, wobei
- der erste Wandungsabschnitt (26) mit der Gewindespindel (64) relativ zum zweiten Wandungsabschnitt (28) bewegbar ist.

10. Vorrichtung (10) nach einem der vorherigen Ansprüche,
**dadurch gekennzeichnet, dass**
- der Grundkörper (14)
o eine Befestigungsfläche (16) und eine dieser gegenüberliegende Rückfläche (18) oder
o eine Befestigungsfläche (16), eine dieser gegenüberliegende Rückfläche (18) und zumindest eine diese verbindende Seitenfläche (20) aufweist, wobei
- auf der Rückfläche (18) und/oder der Seitenfläche (20) zumindest ein Abstandshalter (52) angeordnet ist, mit welchem ein Zwischenraum (50) zwischen der Rückfläche (18) und einem benachbart angeordneten Gegenstand geschaffen werden kann, und
- die Kabelführungseinrichtung (48) im Zwischenraum (50) angeordnet werden kann, sich in den Zwischenraum (50) erstreckt oder vom Zwischenraum (50) gebildet wird.

11. Vorrichtung (10) nach Anspruch 10,
**dadurch gekennzeichnet, dass** die Kabelführungseinrichtung (48) zumindest eine sich von der Befestigungsfläche (16) zur Rückfläche (18) erstreckende Durchgangsbohrung (60) umfasst.

12. Vorrichtung (10) nach einem der vorherigen Ansprüche,
**dadurch gekennzeichnet, dass** die Feststelleinrichtung (22) und/oder der Grundkörper (14) eine Magneteinheit (76) aufweist, mit welcher das Ladegerät (12) oder der Speicher (74) kraftschlüssig am Grundkörper (14) befestigbar ist.

13. Vorrichtung (10) nach Anspruch 12,
**dadurch gekennzeichnet, dass** die Magneteinheit (76) einen Magnet (78) und einen magnetisierten oder magnetisierbaren Gegenkörper (80) umfasst, wobei
- der Magnet (78) am Grundkörper (14) und
- der Gegenkörper (80) am Ladegerät (12) oder am Speicher (74) befestigt oder befestigbar ist oder umgekehrt, oder
- der Magnet (78) oder der Gegenkörper (80) vom Grundkörper (14) gebildet wird, wobei
- der Magnet (78) und der Gegenkörper (80) in kraftschlüssige Wechselwirkung bringbar sind.

14. Vorrichtung (10) nach Anspruch 13,
**dadurch gekennzeichnet, dass** der Magnet (78) oder der Gegenkörper (80) unter Verwendung eines oder mehrerer der Befestigungsabschnitte (32) am Grundkörper (14) befestigbar ist.

15. Vorrichtung (10) nach einem der vorherigen Ansprüche,
**dadurch gekennzeichnet, dass** die Vorrichtung (10) zumindest eine Steckdose oder eine Steckdosenleiste (61) mit zwei oder mehreren Steckdosen umfasst, welche lösbar mit dem Grundkörper (14) befestigbar sind.
